# EUROPEAN PATENT SPECIFICATION

(11) **EP 2 107 153 B1**
(45) Date of publication and mention of the grant of the patent: **20.10.2010**
(21) Application number: 09009698.3
(22) Date of filing: 09.01.2004
(51) Int. Cl.: D06F 39/04, D06F 35/00, D06F 39/08

(54) **Drum washing machine**
Trommelwaschmaschine
Machine à laver à tambour

(30) Priority: 31.03.2003 KR 20030020206
(43) Date of publication of application: 07.10.2009
(62) Divisional of application: 04000336.0
(73) Proprietor: LG Electronics Inc., Seoul 150-721 (KR)
(72) Inventor: Kim, Jin Woong, Kwangmyung-si Kyungki-do, 423-757 (KR); Woo, Kyung Chul, Seoul 158-072 (KR); Oh, Soo Young, Seoul 158-785 (KR); Jeon, Si Moon, Seoul, 137-062 (KR)
(74) Representative: TER MEER - STEINMEISTER & PARTNER GbR

(56) References cited:
- GB-A- 799 788
- GB-A- 1 222 227
- GB-A- 2 348 213
- PATENT ABSTRACTS OF JAPAN vol. 2003, no. 05, 12 May 2003 (2003-05-12) -& JP 2003 019382 A (MITSUBISHI ELECTRIC CORP), 21 January 2003 (2003-01-21)
- PATENT ABSTRACTS OF JAPAN vol. 0164, no. 49 (C-0986), 18 September 1992 (1992-09-18) & JP 04 158896 A (SANYO ELECTRIC CO LTD), 1 June 1992 (1992-06-01)

## Description

The present invention relates to a drum washing machine as described in claim 1. GB 799 788 A already discloses a washing machine which includes a washing drum mounted to be rotatable about a shaft in an outer housing. Fresh water is fed to the housing by means of a pipe connected to a valve housing. The machine is heated either by introducing steam directly into it through a steam pipe, or indirectly by interposing a valve.

A drum washing machine is a kind of washer which is capable of washing clothes by friction between a drum rotated by a motor and the clothes put in the drum while a detergent and wash water are supplied in a horizontally mounted tub and the drum, which is disposed in the tub. With the drum washing machine, the clothes are neither damaged nor tangled with one another. Furthermore, the drum washing machine washes clothes by striking and rubbing the clothes, whereby washing efficiency is improved.

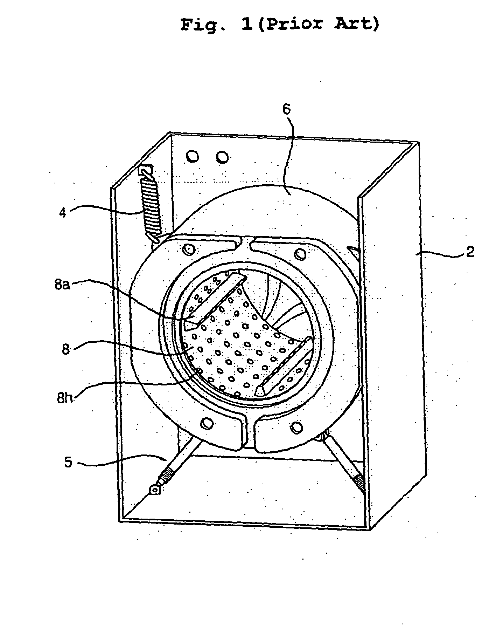

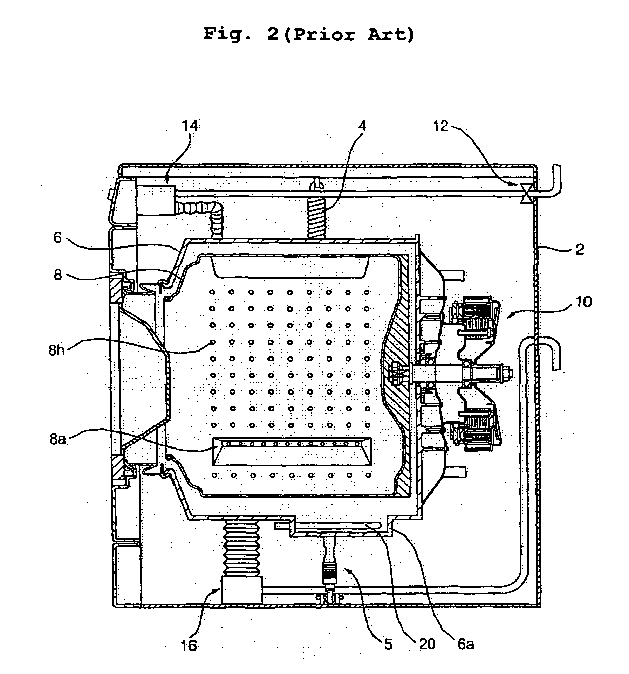

Fig. 1 is a perspective view of a conventional drum washing machine, and Fig. 2 is a side view, in cross section, of the conventional drum washing machine.

As shown in Figs. 1 and 2, the conventional drum washing machine comprises: a casing 2 forming the exterior of the drum washing machine; a tub 6 disposed in the casing 2 in such a manner that the tub 6 is suspended by means of springs 4 and simultaneously supported by means of damper assemblies 5; a drum 8 rotatably mounted in the tub 6, in which clothes are put and into which wash water is supplied; a plurality of vanes 8a provided on the inner circumference of the drum 8 for lifting the clothes in the drum 8 as the drum 8 is rotated, the vanes 8a being longitudinally extended parallel to the axis of rotation of the drum 8 and inwardly protruded to a predetermined height while the vanes 8a are uniformly spaced apart from each other; and a motor 10 connected to the drum 8 in the rear of the tub 6 for rotating the drum 8.

The drum washing machine further comprises: a water-supply valve assembly 12 mounted above the tub 6 for supplying wash water into the tub 6 and the drum 8; a detergent box assembly 14 also mounted above the tub 6 for supplying a detergent into the tub 6 and the drum 8; and a drainage pump assembly 16 mounted below the tub 6 for draining the wash water from the tub 6 and the drum 8.

The drum 8 is provided at the inner circumference thereof with a plurality of through-holes 8h, through which the wash water flows between the drum 8 and the tub 6. When the drum 8 is rotated to dewater the clothes, the wash water contained in the clothes is separated from the clothes by means of the centrifugal force of the drum 8. At this time, the wash water separated from the clothes is discharged through the through-holes 8h. The water-supply valve assembly 12 includes a water-supply valve (not shown) so that the water-supply valve assembly 12 supplies wash water into the tub 6 and the drum 8 when the water-supply valve is opened. Similarly, the drainage pump assembly 16 includes a drainage pump (not shown) so that the drainage pump assembly 16 discharges the wash water from the tub 6 and the drum 8 when the drainage pump is operated.

To the lower part of the tub 6 is mounted a heater 20 for heating wash water in the tub 6 to a high temperature, by which the washing efficiency is improved. Specifically, the tub 6 includes a heater mounting part 6a formed at the lower part thereof. The heater mounting part 6a of the tub 6 is downwardly extended from the tub 6 so that the heater 20 is mounted in the heater mounting part 6a. The heater 20 is slidably inserted into the heater mounting part 6a of the tub 6 from the front part thereof, and then securely fixed to the heater mounting part 6a of the tub 6.

The operation of the conventional drum washing machine with the above-stated construction will now be described.

When a washing process is performed while clothes are put in the drum 8, the water-supply valve is opened so that a proper amount of wash water is supplied into the tub 6 and the drum 8 depending upon the amount of the clothes. The wash water passes through the water-supply valve assembly 12, and then passes through the detergent box assembly 14. The wash water having passed through the detergent box assembly 14 is supplied into the tub 6 together with a detergent.

When the drum 8 is rotated by operation of the motor 10, the clothes are lifted to a predetermined height by the vanes 8a and then dropped from the vanes 8a so that the clothes can be washed by means of friction and impact. At this time, the heater 20 may be operated to heat the wash water in the tub 6 so that the washing efficiency is improved.

After the washing process is finished, the drainage pump is operated so that the wash water is discharged. Subsequently, the motor 10 is rotated at a high speed, and thus the drum 8 is also rotated at a high speed. When the drum 8 is rotated, the wash water contained in the clothes is separated from the clothes by means of the centrifugal force of the drum 8. At this time, the wash water separated from the clothes is discharged through the through-holes 8h. In this way, an intermittent dewatering process is performed. Thereafter, the water-supply valve is opened again so that wash water is supplied into the tub 6 and the drum 8. At the same time, the drum 8 is rotated so that a rinsing process is performed.

The aforementioned rinsing and intermittent dewatering processes are alternately and repeatedly carried out, and finally a dewatering process is performed. In this way, a cleaning process is completed.

In the conventional drum washing machine, however, the wash water is supplied into the tub 6 from the upper part thereof together with the detergent via the water-supply valve assembly 12 and the detergent box assembly 14, and the wash water supplied into the tub 6 is heated by the heater 20 mounted to the lower part of the tub 6. As can be easily understood from the above description, the wash water initially supplied into the tub is cold. Consequently, the wash water is slowly absorbed by the clothes.

The conventional drum washing machine includes the heater mounting part 6a of the tub 6, which is provided so that the heater 20 is mounted in the tub 6. The heater mounting part 6a is formed at the lower part of the tub 6 in such a manner that the heater mounting part 6a is downwardly extended from the tub 6. Consequently, it is required to provide an additional space necessary for forming the heater mounting part 6a in the tub 6, which complicates construction of the drum washing machine.

The wash water supplied in the tub 6 is heated by the heater 20. Since the heater 20 is mounted in the heater mounting part 6a of the tub 6, the wash water is also filled in the heater mounting part 6a of the tub 6, and thus the wash water filled in the heater mounting part 6a of the tub 6 is also heated. However, the wash water filled in the heater mounting part 6a of the tub 6 is not used to wash the clothes. Consequently, wash water and electric energy are uselessly wasted. In addition, the detergent is left with the wash water in the heater mounting part 6a of the tub 6, by which the washing efficiency of the drum washing machine is decreased.

### SUMMARY OF THE INVENTION

Therefore, the present invention has been made in view of the above problems, and it is an object of the present invention to provide a drum washing machine which is capable of heating wash water and spraying the heated wash water into a tub and a drum of the washing machine in a phase of steam, thereby rapidly soaking clothes in the wash water, reducing waste of the wash water and electric energy, and improving sterilizing and washing efficiencies of the drum washing machine.

In accordance with the present invention, the above and other objects can be accomplished by the provision of a drum washing machine comprising: a casing forming the exterior of the drum washing machine; a tub disposed in the casing; a drum rotatably mounted in the tub; a plurality of vanes provided on the inner circumference of the drum for lifting the clothes in the drum as the drum is rotated; a water-supply unit for supplying wash water into the tub and the drum; and a steam generator connected to the water-supply unit for heating the wash water to obtain steam which is supplied to the tub and the drum, wherein the water-supply unit is provided in the casing and comprises: a water-supply valve assembly including a water-supply valve for supplying the wash water; a water-supply tube connected between the water-supply valve assembly and the steam generator; an auxiliary water-supply tube having one end connected to the water-supply valve assembly for supplying the wash water into the tub; and a steam tube for supplying the steam into the tub and the drum.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a perspective view of a conventional drum washing machine;
Fig. 2 is a side view, in cross section, of the conventional drum washing machine;
Fig. 3 is a perspective view of a steam jet drum washing machine according to a first preferred embodiment of the present invention;
Fig. 4 is a side view, in cross section, of the steam jet drum washing machine according to the first preferred embodiment of the present invention;
Fig. 5 is a perspective view showing a steam generator of the present invention;
Fig. 6 is a cross-sectional view taken along line A-A of Fig. 5; and
Fig. 7 is a perspective view of a steam jet drum washing machine according to a second preferred embodiment of the present invention.

### DESCRIPTION OF THE PREFERRED EMBODIMENTS

Now, preferred embodiments of the present invention will be described in detail with reference to the accompanying drawings. In the drawings, the same or similar elements are denoted by the same reference numerals even though they are depicted in different drawings.

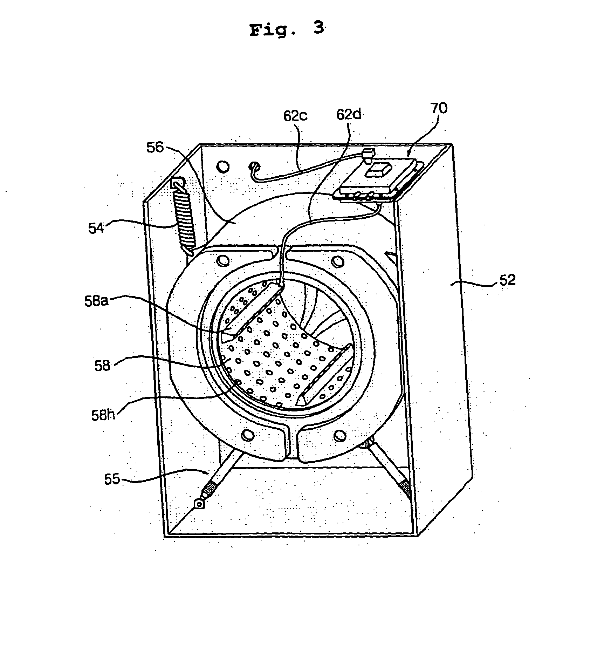

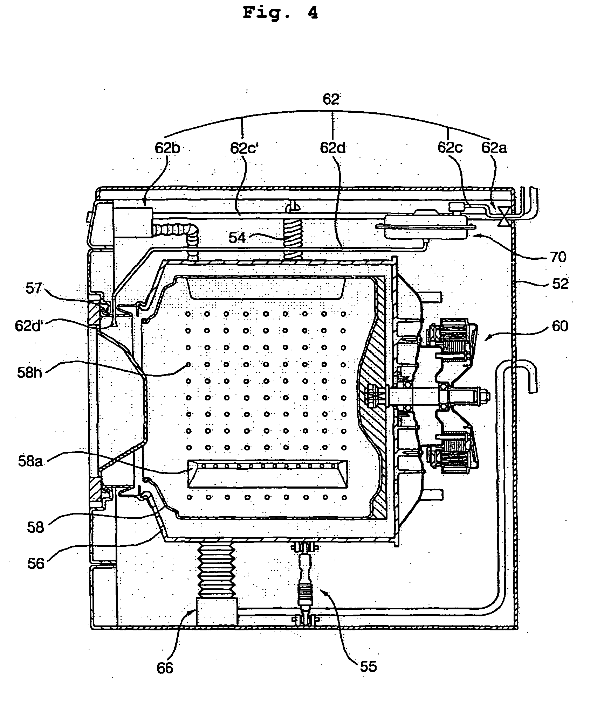

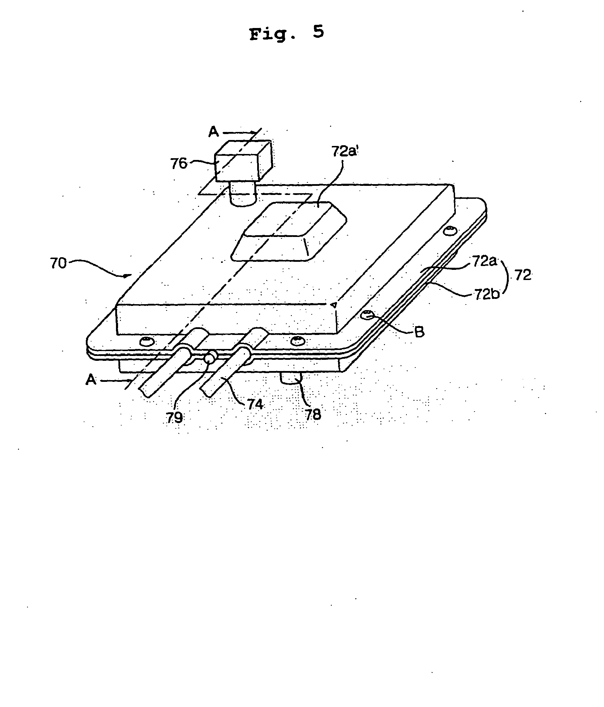

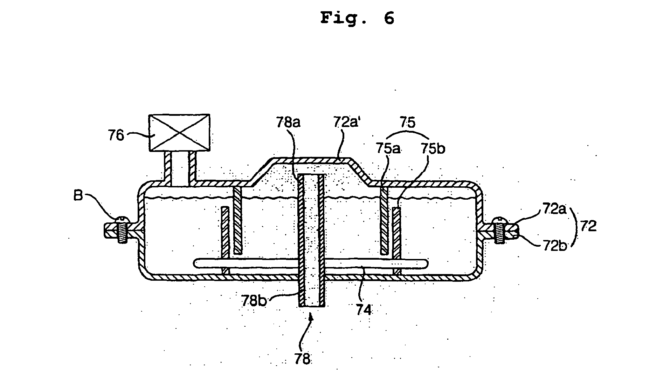

Fig. 3 is a perspective view of a steam jet drum washing machine according to a first preferred embodiment of the present invention, Fig. 4 is a side view, in cross section, of the steam jet drum washing machine according to the first preferred embodiment of the present invention, Fig. 5 is a perspective view showing a steam generator of the present invention, and Fig. 6 is a cross-sectional view taken along line A-A of Fig. 5.

As shown in Figs. 3 and 4, the steam jet drum washing machine according to the first preferred embodiment of the present invention comprises: a casing 52 forming the exterior of the drum washing machine; a tub 56 disposed in the casing 52 in such a manner that the tub 56 is suspended by means of springs 54 and simultaneously supported by means of damper assemblies 55; a drum 58 rotatably mounted in the tub 56, in which clothes are put and into which wash water is supplied; a plurality of vanes 58a provided on the inner circumference of the drum 58 for lifting the clothes in the drum 58 as the drum 58 is rotated, the vanes 58a being longitudinally extended parallel to the axis of rotation of the drum 58 and inwardly protruded to a predetermined height while the vanes 58a are uniformly spaced apart from each other; a motor 60 connected to the drum 58 in the rear of the tub 56 for rotating the drum 58; and a steam generator 70 disposed above the tub 56 for heating the wash water to obtain high-temperature steam, which is supplied to the tub 56 and the drum 58.

The steam jet drum washing machine further comprises: a water-supply unit 62 mounted above the tub 56 for supplying wash water into the tub 56 and the drum 58; and a drainage pump assembly 66 mounted below the tub 56 for draining the wash water from the tub 56 and the drum 58. The steam generator 70 is connected to the water-supply unit 62.

The water-supply unit 62 comprises: a water-supply valve assembly 62a including a water-supply valve mounted to the rear of the casing 52 for supplying wash water; a detergent box assembly 62b mounted between the water-supply valve assembly 62a and the tub 56 for storing a detergent; a water-supply tube 62c connected between the water-supply valve assembly 62a and the steam generator 70; an auxiliary water-supply tube 62c' connected between the water-supply valve assembly 62a and the detergent box assembly 62b; and a steam tube 62d having one end connected to the steam generator 70 and the other end 62d' disposed in the tub 56 and the drum 58 for supplying the steam into the tub 56 and the drum 58.

The water-supply unit 62 may comprises the water-supply valve assembly 62a, the water-supply tube 62c, and the steam tube 62d so that the wash water is supplied into the tub 56 and the drum 58 via only the steam generator 70.

The drum 58 is provided at the inner circumference thereof with a plurality of through-holes 58h, through which the wash water flows between the drum 58 and the tub 56. When the drum 58 is rotated to dewater the clothes, the wash water contained in the clothes is separated from the clothes by means of the centrifugal force of the drum 58. At this time, the wash water separated from the clothes is discharged through the through-holes 58h. The water-supply valve assembly 62 includes a water-supply valve (not shown) so that the water-supply valve assembly 62 supplies wash water into the tub 56 and the drum 58 when the water-supply valve is opened. Similarly, the drainage pump assembly 66 includes a drainage pump (not shown) so that the drainage pump assembly 66 discharges the wash water from the tub 56 and the drum 58 when the drainage pump is operated.

The water-supply tube 62c is connected between the water-supply valve assembly 62a and the steam generator 70 so that the wash water is supplied into the steam generator 70. The auxiliary water-supply tube 62c' is connected between the water-supply valve assembly 62a and the detergent box assembly 62b so that the wash water is supplied into the detergent box assembly 62b. The supply of the wash water into the water-supply tube 62c or the auxiliary water-supply tube 62c' is controlled by the water-supply valve.

Alternatively, an additional auxiliary water-supply valve (not shown) may be mounted in the auxiliary water-supply tube 62c' so that the supply of the wash water into the water-supply tube 62c and the auxiliary water-supply tube 62c' is separately controlled.

The end 62d' of the steam tube 62d is formed in the shape of a nozzle so that steam is sprayed at a high speed from the end 62d'. The end 62d' of the steam tube 62d penetrates through the upper end of a gasket 57 mounted for preventing leakage of water between the tub 56 and the casing 52. Consequently, the steam guided along the steam tube 62d is downwardly sprayed through the end 62d' of the steam tube 62d into the tub 56 and the drum 58.

The water-supply tube 62c and the steam tube 62d are relatively short by the provision of the steam generator 70. The steam generator 70 is disposed above the tub 56 between the tub 56 and the casing 52 so that repair and inspection of the stem generator 70 can be easily and conveniently conducted. For example, the steam generator 70 may be securely mounted to the tub 56 or the casing 52 by means of fixing members (not shown).

As shown in Figs. 5 and 6, the steam generator 70 comprises: a container 72 connected at the top end thereof to the water-supply tube 62c and the steam tube 62d and having an inner space for storing wash water defined therein; a heater 74 mounted in the container 72 for heating the wash water stored in the container 72; an inlet valve 76 disposed between the water-supply tube 62c and the container 72 for supplying the wash water into the container 72; and an outlet tube 78 penetrating through the bottom of the container 72, the outlet tube 78 having the upper end disposed in the upper part of the container 72 and the lower end connected to the steam tube 62d for guiding steam into the steam tube 62d.

The container 72 comprises an upper container part 72a forming the upper part of the container 72, and a lower container part 72b forming the lower part of the container 72. The upper container part 72a and the lower container part 72b are preferably attached at the edges thereof to each other by means of bolts B. The upper container part 72a is provided at the center thereof with a steam storing space 72a', which is upwardly protruded for temporarily storing steam.

The heater 74 is horizontally disposed in the lower container part 72b so that heater 74 can be submerged under the wash water even when the wash water is supplied into the container 72 to the minimum water level. Preferably, the heater 74 is an electric heater formed in the shape of a curved pipe so that the heating surface area is increased.

The steam generator 70 further comprises a temperature sensor 79 for sensing the temperature inside the container 72 to control the operation of the heater 74 on the basis of the temperature inside the container 72. The temperature sensor 79 also serves as a safety switch, such as a thermostat, for cutting off the supply of electric current to the heater 74 to stop the operation of the heater 74.

The inlet valve 76 is preferably a solenoid valve whose opening or closing operation is electronically controlled, which can be used at a low temperature as well as at a low pressure, and can be economically used.

Opening or closing the inlet valve 76 is controlled by means of a water-level sensor (not shown) for sensing the level of the wash water supplied into the tub 56 or an auxiliary water-level sensor (not shown) for sensing the level of the wash water supplied into the container 72. The auxiliary water-level sensor senses the level of the wash water on the basis of the movement of a float on the wash water. Alternatively, the auxiliary water-level sensor may sense the level of the wash water on the basis of the change in inside pressure of the container 72 when the wash water is supplied into the container 72.

The steam generator 70 further comprises a wash-water flow restraining unit 75 mounted in the container 72 for restraining the wash water from flowing toward the upper end of the outlet tube 78 to maintain uniform water level in the container 72, whereby the inflow of the wash water into the tub 56 and the drum 58 via the outlet tube 78 is prevented.

The wash-water flow restraining unit 75 comprises: a first partition 75a downwardly extended from the top of the upper container part 72a around the steam storing space 72a'; and a second partition 75b upwardly extended from the bottom of the lower container part 72b around the first partition 75a. The first and second partitions 75a and 75b are provided at the lower parts thereof with through-holes (not shown), respectively, through which the wash water flows.

Specifically, the first partition 75a and the second partition 75b overlap with each other while the first and second partitions 75a and 75b are spaced apart from each other around the steam storing space 72a'. As a result, the wash water cannot flow toward the steam storing space 72a', and thus the inflow of the wash water into the tub 56 and the drum 58 via the outlet tube 78 is prevented.

The outlet tube 78 is preferably formed in the shape of a straight cylindrical pipe and connected integrally to the lower container part 72b. The upper end 78a of the outlet tube 78 is disposed inside the steam storing space 72a', and the lower end 78b of the outlet tube 78 is disposed outside the lower container part 72b in such a manner that the lower end 78b of the outlet tube 78 is connected to the steam tube 62d. The outlet tube 78 is vertically disposed as shown in Fig. 6.

In the steam generator 70 with the above-stated construction, the wash water supplied in the container 72 is simply heated to generate steam. The steam generated in the container 72 is temporarily stored in the steam storing space 72a', and then supplied into the steam tube 62d via the outlet tube 78. At this time, the pressure of the steam guided along the outlet tube 78 is not higher than the atmospheric pressure with the result that the steam does not smoothly flow.

To this end, the steam generator 70 may further comprise a blowing fan (not shown) mounted in the outlet tube 78 or the steam tube 62d for blowing the steam into the tub 56 and the drum 58.

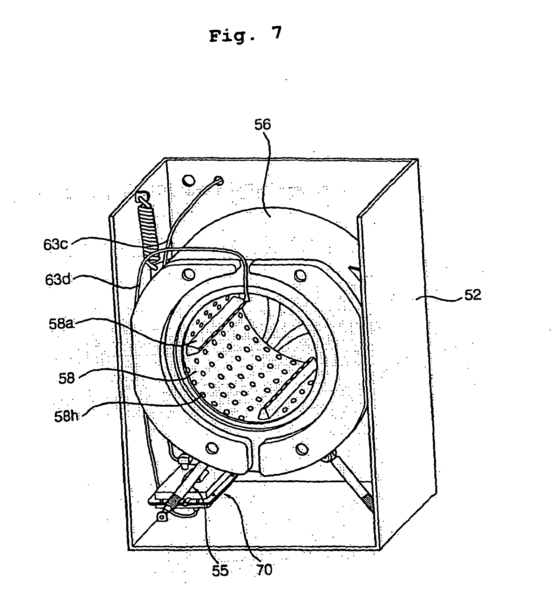

Fig. 7 is a perspective view of a steam jet drum washing machine according to a second preferred embodiment of the present invention.

As shown in Fig. 7, the steam jet drum washing machine according to the second preferred embodiment of the present invention is identical to the steam jet drum washing machine according to the first preferred embodiment of the present invention except that the steam generator 70 is disposed below the.tub 56 between the tub 56 and the casing 52, for example, the steam generator is securely mounted to the tub 56 or the casing 52 by means of fixing members (not shown).

Consequently, the water-supply tube 63c connected between the steam generator 70 and the water-supply valve assembly (not shown) is disposed between one side of the tub 56 and the casing 52. Similarly, the steam tube 63d connected between the steam generator 70 and the tub 56 is disposed between one side of the tub 56 and the casing 52.

When the steam generator 70 is disposed below the tub 56 as described above, the steam generator 70 may be installed in an empty space defined below the tub 56 between the tub 56 and the casing 52. Consequently, the total size of the drum washing machine is not increased even though the steam generator 70 is mounted in the drum washing machine.

The operation of the steam jet drum washing machine with the above-stated construction according to the present invention will now be described.

When a washing process is performed while clothes are put in the drum 58, the water-supply valve and the auxiliary water-supply valve are opened so that a proper amount of wash water is supplied into the tub 56 and the drum 58 depending upon the amount of the clothes. The wash water passes through the auxiliary water-supply tube 62c', and then passes through the detergent box assembly 62b. The wash water having passed through the detergent box assembly 62b is supplied into the tub 56 together with a detergent.

When the wash water is supplied into the tub 56, the water-level sensor senses the level of the wash water supplied into the tub 56. After a proper amount of wash water is supplied into the tub 56, the auxiliary water-supply valve is closed. Consequently, the wash water is no longer supplied into the tub 56 and the drum 58 via the auxiliary water-supply tube 62c'.

When the wash water is to be sprayed in a phase of steam according to a user's selection, the water-supply valve and the inlet valve 76 are opened so that the wash water passes through the water-supply tube 62c, and is then supplied into the steam generator 70 where the wash water is heated to obtain high-temperature steam. The high-temperature steam generated in the steam generator 70 is sprayed into the tub 56 and the drum 58 via the steam tube 62d.

Specifically, when the inlet valve 76 is opened, the wash water is supplied into the container 72. After the wash water is supplied into the container 72 to a predetermined water level, the inlet valve 76 is closed. The level of the wash water supplied into the container 72 is either directly sensed by the auxiliary water-level sensor or indirectly sensed by the water-level sensor.

Sensing the level of the wash water supplied into the container 72 by the water-level sensor will be hereinafter described in detail. When the wash water is continuously supplied into the container 72 over the capacity of the container 72, the wash water is guided into the tub 56 and the drum 58 via the outlet tube 78 and the steam tube 62d. At this time, the fluctuation in level of the wash water in the tub 56 and the 58 is sensed by the water-level sensor, by which it is indirectly sensed that the wash water is supplied into the container 72 to the full capacity of the container 72.

Thereafter, the inlet valve 76 is closed, and the heater 74 is operated. As the heater 74 is operated, the wash water is heated to generate high-temperature steam, which is temporarily stored in the steam storing space 72a'.

At this time, the temperature sensor 79 senses the temperature of the interior of the container 72, and the operation of the heater 74 is controlled on the basis of the sensed temperature so that the heater 74 is not overheated.

As the steam is stored in the steam storing space 72a' to the extent that the pressure in the container 74 is over a predetermined pressure, the steam is supplied into the tub 56 and the drum 58 via the outlet tube 78 and the steam tube 62d so that the clothes are rapidly soaked.

At this time, the steam is sprayed into the tub 56 and the drum 58 through the end 62d' of the steam tube 62d, which is formed in the shape of a nozzle. As a result, the clothes are rapidly soaked.

The blowing fan mounted in the outlet tube 78 or the steam tube 62d is preferably operated so that the steam is rapidly supplied into the tub 56 and the drum 58.

When a proper amount of the wash water is supplied into the tub 56 and the drum 58, the water-supply valve is closed, and the motor 60 is operated. When the drum 58 is rotated by operation of the motor 60, the clothes are lifted to a predetermined height by the vanes 58a and then dropped from the vanes 58a. In this way, a washing process is performed.

After the washing process is finished, the drainage pump is operated so that the wash water is discharged. Subsequently, the motor 60 is rotated at a high speed, and thus the drum 58 is also rotated at a high speed. When the drum 58 is rotated, the wash water contained in the clothes is separated from the clothes by means of the centrifugal force of the drum 58. In this way, an intermittent dewatering process is performed. The water-supply valve and the auxiliary water-supply valve are opened again so that wash water is supplied into the tub 56 and the drum 58 to a predetermined level via the auxiliary water-supply tube 62c'. Thereafter, the drum 58 is rotated so that a rinsing process is performed.

The aforementioned rinsing and intermittent dewatering processes are alternately and repeatedly carried out, and finally a dewatering process is performed. In this way, a process for cleaning the clothes is completed.

It should be noted that the wash water may be supplied into the steam generator 70 where the wash water is heated to obtain high-temperature steam, and the high-temperature steam may be sprayed into the tub 56 and the drum 58 even when the clothes are washed or rinsed as well as when the wash water is initially supplied into the tub 56 and the drum 58, in order to improve sterilizing and washing efficiencies of the drum washing machine.

When the drum 58 is rotated to wash or rinse the clothes, vibration caused by the rotation of the drum 58 is transmitted to the entire drum washing machine with the result that the wash water is fluctuated in the container 72. When the wash water flows toward the steam storing space 72a' in the container 72, the flow of the wash water is restrained by the first and second partitions 75a and 75b. Consequently, the inflow of the wash water into the tub 56 and the drum 58 via the outlet tube 78 is prevented.

As apparent from the above description, the present invention provides a steam jet drum washing machine **characterized in that** wash water is supplied into a steam generator where the wash water is heated to obtain high-temperature steam, and the steam is sprayed into a tub and a drum of the drum washing machine, thereby rapidly soaking clothes in the wash water when the wash water is initially supplied into the tub and the drum, saving wash water and electric energy. In addition, the wash water is supplied in a phase of high-temperature steam when clothes are washed and rinsed, whereby sterilizing and washing efficiencies of the drum washing machine are improved.

Furthermore, the steam jet drum washing machine is **characterized in that** the wash water is heated in a container of the steam generator to generate steam, the generated stem is temporarily stored in a steam storing space defined in the container, which is then directly supplied into the tub and drum via an outlet tube. Consequently, the size of the container in which the wash water is heated can be reduced, and thus the total size of the drum washing machine can also be reduced. In addition, the steam jet drum washing machine does not require an additional outlet valve, whereby costs of manufacturing the drum washing machine are reduced.

## Claims

1. A drum washing machine comprising:
a casing (52) forming the exterior of the drum washing machine;
a tub (56) disposed in the casing (52);
a drum (58) rotatably mounted in the tub (56);
a plurality of vanes (58a) provided on the inner circumference of the drum (58) for lifting the clothes in the drum as the drum is rotated;
a water-supply unit (62) for supplying wash water into the tub (56) and the drum (58); and
a steam generator connected to the water-supply unit for heating the wash water to obtain steam which is supplied to the tub (56) and the drum (58),
**characterized in that** the water-supply unit is provided in the casing (52) and comprises:
a water-supply valve assembly (62a) including a water-supply valve for supplying the wash water;
a water-supply tube (62c) connected between the water-supply valve assembly (62a) and the steam generator;
an auxiliary water-supply tube (62c') having one end connected to the water-supply valve assembly (62a) for supplying the wash water into the tub(56); and
a steam tube (62d) for supplying the steam into the tub (56) and the drum (58).

2. The machine according to claim 1, wherein the steam generator (70) is disposed above the tub (56) between the tub (56) and the casing (52).

3. The machine according to claim 1, wherein the steam generator (70) is disposed below the tub (56) between the tub (56) and the casing (52).

4. The machine according to any one of claims 1 to 3, wherein the steam tube (62d) has one end connected to the steam generator (70) and the other end arranged for supplying the steam downwardly into the tub (56) and the drum (58).

5. The machine according to any one of claims 1 to 4, wherein a plurality of through-holes (58h) is provided at the inner circumference of the drum (58) for flowing the wash water between the tub (56) and the drum (58).

6. The machine according to any one of claims 1 to 5, wherein the supply of the wash water into the water-supply tube (62c) or the auxiliary water-supply tube (62c') is controlled by the water-supply valve.

7. The machine according to any one of claims 1 to 5, further comprising an additional auxiliary water-supply valve mounted in the auxiliary water-supply tube (62c').

8. The machine according to claim 7, wherein the supply of the wash water into the water-supply tube (62c) and the auxiliary water-supply tube (62c') is separately controlled by the water-supply valve and the additional auxiliary water-supply valve, respectively.

9. The machine according to any one of claims 1 to 8, wherein the steam generator (70) includes a container (72) comprising an upper container (72a) forming an upper part of the container (72) and a lower container (72b) forming a lower part of the container (72).

10. The machine according to any one of claims 1 to 9, wherein the upper container part (72a) and the lower container part (72b) are attached to each other by means of bolts (B).

11. The machine according to any one of claims 1 to 10, wherein the water-supply tube (63c) is disposed between one side of the tub (56) and the casing (52).

12. The machine according to any one of claims 1 to 11, wherein the end (62d') of the steam tube (62d) is formed in the shape of a nozzle for spraying the steam into the tub (56) and the drum (58).

13. The machine according to any one of claims 1 to 12, wherein the water-supply valve is mounted to the rear of the casing (52).

14. The machine according to any one of claims 1 to 13, wherein the steam generator (70) includes a heater (74) for heating water in the steam generator (70) and a temperature sensor (79) for controlling the operation of the heater (74).

15. The machine according to any one of claims 1 to 14, wherein the water-supply unit (62) comprises a detergent box assembly (62b) mounted between the water-supply valve assembly (62a) and the tub (56) for storing a detergent, and wherein the auxiliary water-supply tube (62c' ) connected between the water-supply valve assembly (62a) and the detergent box assembly (62d).

16. The machine according to any one of claims 15, wherein the steam is directly supplied into the tub through the steam tube and the steam supply through the steam tube is not controlled.

## Patentansprüche

1. Trommelwaschmaschine, die umfasst:
ein Gehäuse (52), das die Außenseite der Trommelwaschmaschine bildet;
einen Trog (56), der in dem Gehäuse (52) angeordnet ist;
eine Trommel (58), die in dem Trog (56) drehbar angebracht ist;
mehrere Schaufeln (58a), die am inneren Umfang der Trommel (58) vorgesehen sind, um die Kleidungsstücke in der Trommel hochzuheben, wenn sich die Trommel dreht;
eine Wasserzufuhreinheit (62), um dem Trog (56) und der Trommel (58) Waschwasser zuzuführen; und
einen Dampfgenerator, der mit der Wasserzufuhreinheit verbunden ist, um das Waschwasser zu erwärmen, um Dampf zu erhalten, der dem Trog und der Trommel (58) zugeführt wird,
**dadurch gekennzeichnet, dass** die Wasserzufuhreinheit im Gehäuse (52) vorgesehen ist und umfasst:
eine Wasserzufuhrventilanordnung (62a), die ein Wasserzufuhrventil zum Zuführen des Waschwassers enthält;
ein Wasserzufuhrrohr (62a), das zwischen der Wasserzufuhrventilanordnung (62a) und dem Dampfgenerator angeschlossen ist;
ein Hilfswasserzufuhrrohr (62c'), wovon ein Ende mit der Wasserzufuhrventilanordnung (62a) verbunden ist, um dem Trog (56) Waschwasser zuzuführen; und
ein Dampfrohr (62d), um den dem Trog (56) und der Trommel (58) Dampf zuzuführen.

2. Maschine nach Anspruch 1, wobei der Dampfgenerator (70) oberhalb des Trogs (56) zwischen dem Trog (56) und dem Gehäuse (52) angeordnet ist.

3. Maschine nach Anspruch 1, wobei der Dampfgenerator (70) unterhalb des Trogs (56) zwischen dem Trog (56) und dem Gehäuse (52) angeordnet ist.

4. Maschine nach einem der Ansprüche 1 bis 3, wobei das Dampfrohr (62d) mit einem Ende mit dem Dampfgenerator (70) verbunden ist, während sein anderes Ende angeordnet ist, um den Dampf nach unten in den Trog (56) und die Trommel (58) zu liefern.

5. Maschine nach einem der Ansprüche 1 bis 4, wobei am inneren Umfang der Trommel (58) mehrere Durchgangslöcher (58h) vorgesehen sind, damit Waschwasser zwischen dem Trog (56) und der Trommel (58) fließen kann.

6. Maschine nach einem der Ansprüche 1 bis 5, wobei die Zufuhr des Waschwassers in das Wasserzufuhrrohr (62c) oder in das Hilfswasserzufuhrrohr (62c') durch das Wasserzufuhrventil gesteuert wird.

7. Maschine nach einem der Ansprüche 1 bis 5, die ferner ein zusätzliches Hilfswasserzufuhrventil umfasst, das in dem Hilfswasserzufuhrrohr (62c') angebracht ist.

8. Maschine nach Anspruch 7, wobei die Zufuhr des Waschwassers in das Wasserzufuhrrohr (62c) und in das Hilfswasserzufuhrrohr (62c') durch das Wasserzufuhrventil bzw. das zusätzliche Hilfswasserzufuhrventil getrennt gesteuert wird.

9. Maschine nach einem der Ansprüche 1 bis 8, wobei der Dampfgenerator (70) einen Behälter (72) aufweist, der einen oberen Behälter (72a), der einen oberen Teil des Behälters (72) bildet, und einen unteren Behälter (72b), der einen unteren Teil des Behälters (72) bildet, umfasst.

10. Maschine nach einem der Ansprüche 1 bis 9, wobei der obere Behälterteil (72a) und der untere Behälterteil (72b) mittels Schraubbolzen (B) aneinander befestigt sind.

11. Maschine nach einem der Ansprüche 1 bis 10, wobei das Wasserzufuhrrohr (63c) zwischen einer Seite des Trogs (56) und dem Gehäuse (52) angeordnet ist.

12. Maschine nach einem der Ansprüche 1 bis 11, wobei das Ende (62d') des Dampfrohrs (62d) in Form einer Düse ausgebildet ist, um den Dampf in den Trog (56) und in die Trommel (58) zu sprühen.

13. Maschine nach einem der Ansprüche 1 bis 12, wobei das Wasserzufuhrventil an der Rückseite des Gehäuses (52) angebracht ist.

14. Maschine nach einem der Ansprüche 1 bis 13, wobei der Dampfgenerator (70) eine Heizeinrichtung (74), um Wasser im Dampfgenerator (70) zu erwärmen, und einen Temperatursensor (79), um den Betrieb der Heizeinrichtung (74) zu steuern, umfasst.

15. Maschine nach einem der Ansprüche 1 bis 14, wobei die Wasserzufuhreinheit (62) eine Waschmittelkastenanordnung (62b) umfasst, die zwischen der Wasserzufuhrventilanordnung (62a) und dem Trog (56) angebracht ist, um ein Waschmittel aufzubewahren, und wobei das Hilfswasserzufuhrrohr (62c') zwischen der Wasserzufuhrventilanordnung (62a) und der Waschmittelkastenanordnung (62d) verbunden ist.

16. Maschine nach einem der Ansprüche 15, wobei der Dampf durch das Dampfrohr direkt dem Trog zugeführt wird und die Dampfzufuhr durch das Dampfrohr nicht gesteuert wird.

## Revendications

1. Machine à laver à tambour, comprenant :
une carrosserie (52) formant l'extérieur de la machine à laver à tambour ;
une cuve (56) disposée dans la carrosserie (52) ;
un tambour (58) monté dans la cuve (56) de manière à pouvoir tourner ;
une pluralité d'ailettes (58a) disposées sur le pourtour intérieur du tambour (58) pour soulever le linge dans le tambour durant la rotation du tambour ;
un dispositif d'alimentation (62) en eau pour envoyer de l'eau de lavage dans la cuve (56) et le tambour (58) ; et
un générateur de vapeur relié au dispositif d'alimentation en eau pour chauffer l'eau de lavage afin d'obtenir de la vapeur qui est envoyée dans la cuve (56) et le tambour (58),
**caractérisé en ce que** le dispositif d'alimentation en eau est installé dans la carrosserie (52) et comporte :
un ensemble (62a) de vanne d'alimentation en eau comprenant une vanne d'alimentation en eau pour fournir l'eau de lavage ;
un tuyau d'alimentation (62c) en eau monté entre l'ensemble de vanne d'alimentation (62a) et le générateur de vapeur ;
un tuyau auxiliaire d'alimentation (62c') en eau ayant une extrémité reliée à l'ensemble (62a) de vanne d'alimentation en eau pour introduire l'eau de lavage dans la cuve (56) ; et
un tuyau (62d) de vapeur pour introduire la vapeur dans la cuve (56) et le tambour (58).

2. Machine selon la revendication 1, dans laquelle le générateur (70) de vapeur est disposé au-dessus de la cuve (56), entre la cuve (56) et la carrosserie (52).

3. Machine selon la revendication 1, dans laquelle le générateur (70) de vapeur est disposé sous la cuve (56), entre la cuve (56) et la carrosserie (52).

4. Machine selon l'une quelconque des revendications 1 à 3, dans laquelle le tuyau (62d) de vapeur a une première extrémité reliée au générateur (70) de vapeur et l'autre extrémité conçue pour faire descendre la vapeur jusque dans la cuve (56) et le tambour (58).

5. Machine selon l'une quelconque des revendications 1 à 4, dans laquelle une pluralité de trous traversants (58h) sont ménagés dans le pourtour intérieur du tambour (58) pour faire circuler l'eau de lavage entre la cuve (56) et le tambour (58).

6. Machine selon l'une quelconque des revendications 1 à 5, dans laquelle l'envoi de l'eau de lavage dans le tuyau d'alimentation (62c) en eau ou le tuyau auxiliaire d'alimentation (62c') en eau est commandé par la vanne d'alimentation en eau.

7. Machine selon l'une quelconque des revendications 1 à 5, comprenant en outre une vanne auxiliaire supplémentaire d'alimentation en eau montée dans le tuyau auxiliaire d'alimentation (62c') en eau.

8. Machine selon la revendication 7, dans laquelle l'envoi de l'eau de lavage dans le tuyau d'alimentation (62c) en eau et le tuyau auxiliaire d'alimentation (62c') en eau est commandé séparément, respectivement par la vanne d'alimentation en eau et la vanne auxiliaire supplémentaire d'alimentation en eau.

9. Machine selon l'une quelconque des revendications 1 à 8, dans laquelle le générateur (70) de vapeur comprend un boîtier (72) comportant un boîtier supérieur (72a) formant une partie supérieure du boîtier (72) et un boîtier inférieur (72b) formant une partie inférieure du boîtier (72).

10. Machine selon l'une quelconque des revendications 1 à 9, dans laquelle la partie supérieure (72a) du boîtier et la partie inférieure (72b) du boîtier sont fixées l'une à l'autre à l'aide de boulons (B).

11. Machine selon l'une quelconque des revendications 1 à 10, dans laquelle le tuyau d'alimentation (63c) en eau est disposé entre un côté de la cuve (56) et la carrosserie (52).

12. Machine selon l'une quelconque des revendications 1 à 11, dans laquelle l'extrémité (62d') du tuyau (62d) de vapeur se présente sous la forme d'une buse pour pulvériser la vapeur en direction de la cuve (56) et du tambour (58).

13. Machine selon l'une quelconque des revendications 1 à 12, dans laquelle la vanne d'alimentation en eau est montée à l'arrière de la carrosserie (52).

14. Machine selon l'une quelconque des revendications 1 à 13, dans laquelle le générateur (70) de vapeur comprend un système de chauffage (74) pour chauffer de l'eau dans le générateur (70) de vapeur et un capteur (79) de température pour commander le fonctionnement du système de chauffage (74).

15. Machine selon l'une quelconque des revendications 1 à 14, dans laquelle le dispositif d'alimentation (62) en eau comporte un ensemble de boîte (62b) à détergent monté entre l'ensemble (62a) de vanne d'alimentation en eau et la cuve (56) pour stocker un détergent, et dans laquelle le tuyau auxiliaire d'alimentation (62c') en eau est monté entre l'ensemble de vanne d'alimentation (62a) en eau et l'ensemble de boîte (62d) à détergent.

16. Machine selon l'une quelconque des revendications 1 à 15, dans laquelle la vapeur est envoyée directement dans la cuve via le tuyau de vapeur et l'envoi de vapeur via le tuyau de vapeur n'est pas commandé.
